# EUROPÄISCHE PATENTSCHRIFT

(11) **EP 0 400 394 B1**
(45) Veröffentlichungstag und Bekanntmachung des Hinweises auf die Patenterteilung: **14.08.1996**
(21) Anmeldenummer: 90109141.3
(22) Anmeldetag: 15.05.1990
(51) Int. Cl.: H04M 7/00, H04Q 11/04, H04Q 1/448, H04Q 3/58

(54) **Schnittstelleneinrichtung**
Interface device
Dispositif d'interface

(30) Priorität: 31.05.1989 DE 3917713
(43) Veröffentlichungstag der Anmeldung: 05.12.1990
(73) Patentinhaber: SIEMENS AKTIENGESELLSCHAFT, 80333 München (DE)
(72) Erfinder: Riedle, Ulrich, D-8152 Feldkirchen (DE)

(56) Entgegenhaltungen:
- DE-A- 3 624 862
- GB-A- 2 011 689
- CONFERENCE ON COMMUNICATIONS EQUIPMENT AND SYSTEMS 20. April 1982, Seiten 22 - 26; AMES J. ET AL: 'A Universal Junction Interface for Digital Exchanges'
- PATENT ABSTRACTS OF JAPAN vol. 12, no. 85 (E-591) 17. März 1988; & JP-A-62 220 054
- ELECTRICAL COMMUNICATION Bd. 59, Nr. 1/2, 17. Dezember 1984, HARLOW - GB Seiten 43 - 47;J.DANEELS ET AL.:'System 12 Analog Line Circuit'

## Beschreibung

Die vorliegende Erfindung betrifft eine Schnittstelleneinrichtung mit Verstärkungs- und Dämpfungsgliedern sowie unterschiedlichen Signalisierungsdetektoren zwischen einem doppelt gerichteten Übertragungskanal mit Analogsignalen und einem einen Vierdraht-Eingang aufweisenden Signalprozessor-Codec-Filter zur Anpassung der Leitungssignalisierungen an die Schnittstellenmeldungen eines digitalen Kommunikationssystems.

Eine derartige Schnittstelleneinrichtung stellt das Bindeglied zwischen dem Signalprozessor-Codec-Filter und dem Übertrager einer Verbindungsleitung zwischen Nebenstellenanlagen untereinander bzw. zwischen Nebenstellenanlagen und öffentlichem Amt dar. Diese Schnittstelleneinrichtung muß mehrere Funktionen erfüllen. Das sind zur Unterstützung des Signalprozessor-Codec-Filters die Funktionen Verstärken bzw. Dämpfen von Sprachsignalen, Aufbau einer Gegenkopplung zur Unterstützung der Zweidraht-Vierdrahtwandlung und der Aufbau einer Mitkopplung zur Unterstützung der Bildung einer Eingangsimpedanz. Darüberhinaus muß die Schnittstelleneinrichtung in der Lage sein, die Gebührenimpulse herauszufiltern und zu erfassen sowie die Gebührenimpulse in Richtung des Signalprozessor-Codec-Filters zu unterdrücken. Weiterhin müssen Rufsignale und Auslösemeldungen erkannt werden. Dabei darf die Vollduplexfähigkeit des gesamten Ubertragungskanals nicht eingeschränkt werden und die Schnittstelleneinrichtung muß im Stand-by-Modus-Teil abschaltbar sein. Es müssen Signalisierungsspannungen von max 12 V effektiv für die Gebührenimpulse mit einer Frequenz von 12 kHz bzw. 16 kHz und 90 V effektiv für die Auslösespannung im Frequenzbereich < 60 Hz sowie Sprachsignalspannungen kleiner 1,1 V effektiv im Sprachband (o,3 bis 3,4 kHz) verarbeitet werden können.

Eine derartige Schnittstelleneinrichtung ist z.B. aus CONFERENCE ON COMMUNICATIONS EQUIPMENT AND SYSTEMS, 20. April 1982, Seiten 22 - 26; AMES J.ET AL: "A Universal Junction Interface for Digital Exchanges". Diese bekannte Schnittstelleneinrichtung eignet sich aber nicht für einen Betrieb in Niedervolt-Technik.

Aufgabe der vorliegenden Erfindung ist es, eine Schnittstelleneinrichtung der oben genannten Art so auszubilden, daß sie als integrierter Baustein in z.B. 10V-C-MOS-Technologie betrieben werden kann.

Die Lösung dieser Aufgabe ist dadurch gekennzeichnet, daß die Verstärkungs- und Dämpfungsglieder für die Sprache im Vierdrahtkreis angeordnet sind,
daß der Übertrager der Verbindungsleitung als Dämpfungsglied in unteren Frequenzbereichen betrieben wird und der komplexe Sende-bzw. Abschlußwiderstand so gewählt ist, daß alle Signalisierungsspannungen in einen für eine 10 V-Technologie auswertbaren Bereich transformiert werden,
wobei die Signalisierungsspannungen hinter dem komplexen Widerstand abgegriffen werden und
wobei die Signalisierungsspannungen zur Unterdrückung höherfrequenter Störsignale über einen Tiefpass einem Rufsignaldetektor bzw. über einen selektiven Bandpaß einem Gebührensignaldetektor zugeführt werden.

Aufgrund dieses Aufbaus der Schnittstelleneinrichtung ist ein Betrieb der Schnittstelleneinrichtung in Niedervolt-Technik, d.h. z.B. in 10 V-C-MOS-Technologie möglich. Gegenüber einer Ausführung der Schnittstelleneinrichtung in High-Voltage-Technologie ergibt sich ein verhältnismäßig kleiner und preiswerter Baustein mit geringen Versorgungsspannungen.

Eine vorteilhafte Ausgestaltung der Erfindung ist eine Schnittstelleneinrichtung mit einem Rufsignaldetektor, bei dem das Ausgangssignal des Tiefpasses über einen Schwellwertschalter einem Flipflop zugeführt wird, dessen Ausgang das Anliegen eines Rufsignals anzeigt, und bei dem gleichzeitig mit dem Schwellwertschalterausgangssignal ein Zählertakt für eine Zählschaltung freigegeben wird, die nach Ausbleiben des zu erkennenden Signals und einer vorgegebenen Zeit ein Zurücksetzen des Flipflops veranlaßt. Dieser Rufsignaldetektor zeichnet sich durch einen einfachen Aufbau aufgrund der Verwendung einfacher Schaltungskonzepte aus.

Eine andere zweckmäßige Ausgestaltung der Erfindung ist eine Schnittstelleneinrichtung mit einem Gebührensignaldetektor, bei dem die Gebührenimpulse hinter dem Bandpaß einen Schwellwertschalter durchlaufen, an dessen Ausgang sie eine Impulsfolge erzeugen, deren Frequenz der des Gebührenimpulssignals entspricht, bei dem mit der ersten Flanke der Impulsfolge ein Flipflop gesetzt wird, dessen Ausgang das Anliegen eines Gebührenimpulses anzeigt, und gleichzeitig eine Zählschaltung zurückgesetzt wird, und bei dem nach Ausbleiben der Impulsfolge länger als eine vorgegebene Zeit die Zählschaltung nach Erreichen des entsprechenden Zählwertes ein Zurücksetzen des Flipflops veranlaßt. Dieser Gebührensignaldetektor zeichnet sich ebenso wie der Rufsignaldetektor durch einen einfach und übersichtlichen Aufbau und durch die Verwendung einfacher Schaltungskonzepte aus.

Besonders vorteilhaft ist eine Schnittstelleneinrichtung mit Gebührensignaldetektor, bei dem eine Umschaltemöglichkeit zwischen zwei Schwellwertschaltern mit unterschiedlichen Schwellwerten besteht. Damit ist es auf einfache Weise möglich, die Empfindlichkeit des Detektors umzuschalten.

Weiterhin ist eine Schnittstelleneinrichtung mit Gebührensignaldetektor von besonderem Vorteil, bei dem entsprechend der Frequenz der Gebührenimpulse einer von zwei vorhandenen Bandpässen wirksam geschaltet wird, wobei jedem Bandpaß ein eigenes Flipflop und ein entsprechender Zählwert der Zählschaltung zugeordnet ist. Damit kann auf einfache Weise unterschiedliche Länderanforderungen in der Gebührensignalerkennung reagiert werden.

Nachfolgend soll die Erfindung anhand eines Ausführungsbeispiels näher erläutert werden.

Es zeigen:
- FIG 1: den Anschluß der Schnittstelleneinrichtung zwischen Verbindungsleitung und Signalprozessor-Codec-Filter,
- FIG 2: den prinzipiellen Aufbau der erfindungsgemäßen Schnittstelleneinrichtung,
- FIG 3: den Aufbau eines Rufsignaldetektors der erfindungsgemässen Schnittstelleneinrichtung, und
- FIG 4: den prinzipiellen Aufbau eines Gebührensignaldetektors der erfindungsgemäßen Schnittstelleneinrichtung.

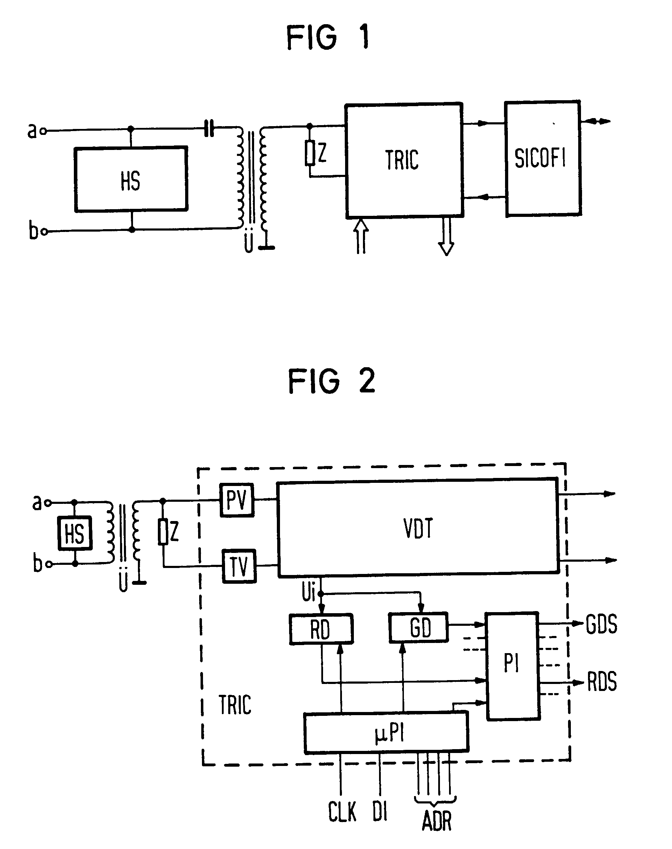

Fig 1 zeigt die Anordnung der Schnittstelleneinrichtung TRIC zwischen dem Signalprozessor-Codec-Filter SICOFI und der Amtsleitung mit den a-und b-Adern. Vor dem Übertrager Ü ist amtsseitig eine Halte- und Speiseeinrichtung HS vorgesehen. Auf den Aufbau des Signalprozessor-Codec-Filters SICOFI soll hier nicht näher eingegangen werden, da er und auch seine Zusammenarbeit mit einer Peripherbaugruppensteuerung eines digitalen Kommunikationssystems für den Fachmann allgemein bekannt ist.

Die breiten Pfeile, die in die Schnittstelleneinrichtung hineinführend und von ihr wegführen deuten Signale und Steuerungsleitungen an, die mit dem eigentlichen Übertragungsweg nicht zusammenhängen und zum Einstellen der Schnittstelleneinrichtung dienen. Mit Z ist eine Sende- bzw. Abschlußimpedanz für die Signalübertragung bezeichnet.

FIG 2 zeigt den prinzipiellen Aufbau der erfindungsgemäßen Schnittstelleneinrichtung. Mit VDT ist der Verstärkungs- und Dämpfungsteil zur Unterstützung des Signalprozessor-Codec-Filters SICOFI bezeichnet. Dieses Verstärkungs- und Dämpfungsteil VDT enthält einen Gegenkopplungspfad zur Unterstützung der Zweidraht-Vierdrahtumwandlung sowie einen Mitkopplungspfad zur Unterstüzung der Bildung einer zweidrahtseitigen Eingangsimpedanz. Eingangsseitig ist ein Pufferverstärker PV vorgesehen, der z.B. durch einen Operationsverstärker mit einem hochohmigen Eingangswiderstand als Spannungsfolger realisiert ist. Ausgangsseitig befindet sich ein Treiberverstärker TV zum Treiben der Leitung. Direkt hinter dem eingangsseitigen Pufferverstärker wird die Signalisierungsspannung Ui abgegriffen, welche fallweise die Rufspannung, Auslösespannung sowie die Gebührenimpulsspannung sein kann.

Diese Signalisierungsspannung Ui wird sowohl einem Rufsignaldetektor RD als auch einem Gebührensignaldetektor GD zugeführt. Die beiden Detektoren werden über ein µP-Interface µPI von einer zentralen Einrichtung aus angesteuert. Dabei legt ADR die Adresse der gesamten Einheit TRIC fest, DI stellt den Dateneingang für das Mikroprozessorinterface und CLK den Takteingang dar. Die detektierten Signale werden über ein paralleles Interface PI als Gebührenimpulssignal GDS bzw. als Rufsignal RDS dem digitalen Kommunikationssystem zur weiteren Verarbeitung zugeführt.

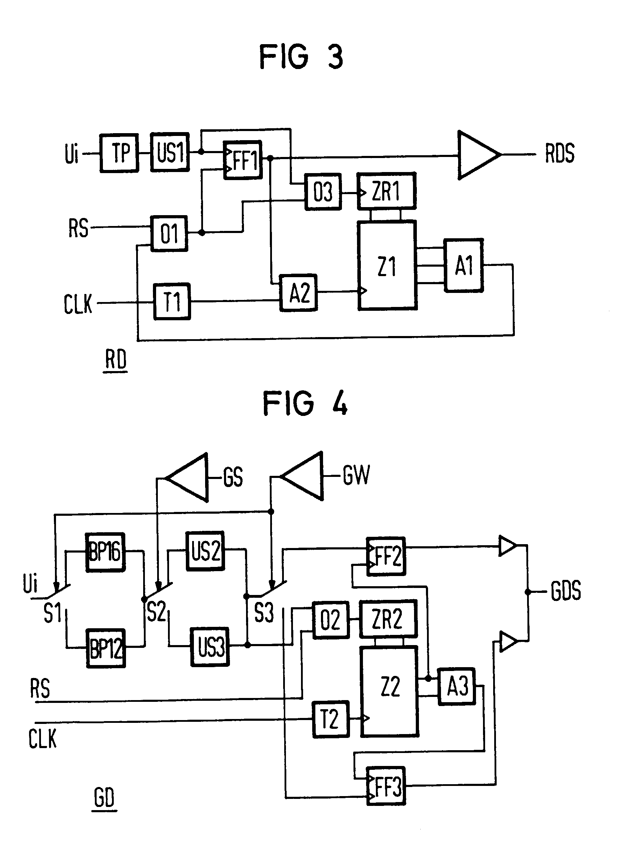

FIG 3 zeigt den Rufsignaldetektor RD, der im wesentlichen aus dem Tiefpaß TP, dem Schwellwertschalter US1, dem Flipflop FF1 sowie der Zählschaltung Z1 in Verbindung mit den UND-Gattern A1 und A2 sowie der Rücksetzschaltung ZR1 besteht.

Der Rufsignaldetektor muß Pegel größer 1 Volt ± 100 mVolt im Frequenzbereich 20 Hz ≤ f ≤ 60 Hz sicher erkennen. Daher werden Signale, deren Frequenz größer als 200 Hz sind, durch den Tiefpaß TP mindestens um 15 dB gedämpft; damit werden auch gleichzeitig die Sprachsignale und Gebührenimpulse ausgeblendet. Zusätzlich wird das Eingangssignal durch das Tiefpaßfilter TP von Störungen befreit. Das Schwellwertschalterausgangssignal des Schwellwertschalters S1 setzt das Flipflop 1 und hält die Zähleinrichtung gesperrt. Der Ausgang RDS wird 'high' und gleichzeitig wird der Zählertakt über das UND-Gatter A2 freigegeben. Bleibt das zu erkennende Signal länger als eine vordefinierte Zeit aus, so wird das Flipflop FF1 durch die dann freigegebene Zähleinrichtung zurückgesetzt und das Indikationssignal RGD wird 'low'. Die Beobachtungszeit der Zähleinrichtung ist einstellbar. Die Zähleinrichtung dient der Störbefreiung des Indikationssignals. Ein Resetimpuls am Rücksetzeingang RS löscht den Zähler und setzt das Ausgangssignal auf 'low'. Der Schwellwertschalter US1 schaltet bei Spannungen Ui > +1 V ein und bei Spannungen Ui < -1 V wieder aus. Sein Ausgang gibt TTL-Signale ab.

FIG 4 zeigt den Gebührensignaldetektor GD. Der Gebührensignaldetektor verfügt in seinem Eingangsteil über zwei parallel liegende Bandpäße Bp12 und Bp16 sowie über zwei parallel liegende Schwellwertschalter US2 und US3. Über die Umschalteingänge GS und GW wird jeweils einer der Bandpässe sowie einer der Schwellwertschalter aktiviert. Die Bandpässe sind entsprechend der Länderanforderung 12 kHz- bzw. für 16 kHz-Gebührenimpulse ausgelegt. Die Auswahl des jeweiligen Bandpasses erfolgt über den Schalter S1. Mit Hilfe des Umschalteeingangs für die Spannungsschwelle kann einer der beiden Schwellwertschalter US2 bzw. US3 aktiviert werden. Es können hier zwei unterschiedliche Spannungsschwellen eingestellt werden, je nachdem ob auf der Leitung ein großer oder ein kleiner Pegel anliegt. Das heißt, die Empfindlichkeit kann je nach Leitungsdämpfung eingestellt werden.

Die Gebührenimpulse erzeugen am Schwellwertschalter US2 bzw. US3 eine Impulsfolge, deren Frequenz der Frequenz des Gebührenimpulssignals entspricht. Mit der ersten Flanke der Impulsfolge wird das entsprechende Flipflop, entweder FF2 oder FF3 gesetzt und gleichzeitig die Zählschaltung Z2 mit der Rücksetzeinrichtung ZR2 zurückgesetzt, während das Gebührenimpulssignal GDS am Ausgang des Detektors 'high' wird. Solange die Impulsfolge anliegt, bleibt die Zähleinrichtung gesperrt. Bleibt nun die Impulsfolge länger als eine vorgegebene Zeit aus, so erreicht der Zähler jeweils den entsprechenden Zählwert und löscht das entsprechende Flipflop so das daß Gebührenimpulssignal GDS 'low' wird. Die Zähleinrichtung dient der Störbefreiung des Indikationssignals. Die Beobachtungszeit ist einstellbar.

## Patentansprüche

1. Schnittstelleneinrichtung mit Verstärkungs- und Dämpfungsgliedern sowie unterschiedlichen Signalisierungsdetektoren zwischen einem doppelt gerichtetem Übertragungskanal mit Analogsignalen und einem einen Vierdraht-Eingang aufweisenden Signalprozessor-Codec-Filter zur Anpassung der Leitungssignalisierung an die Schnittstellenmeldungen eines digitalen Kommunikationssystems,
**dadurch gekennzeichnet**,
daß die Verstärkungs- und Dämpfungsglieder (VDT) für die Sprache im Vierdrahtkreis angeordnet sind,
daß der Übertrager (Ü) der Verbindungsleitung als Dämpfungsglied im unteren Frequenzbereich betrieben wird, und der komplexe Sende- bzw. Abschlußwiderstand (Z) so gewählt ist, daß alle Signalisierungsspannungen in einen für eine 10 V-Technologie auswertbaren Bereich transformiert werden,
wobei die Signalisierungsspannungen hinter den komplexen Widerstand (Z) abgegriffen werden, und
wobei die Signalisierungsspannungen zur Unterdrückung höher frequenter Störsignale über einen Tiefpaß (TP) einem Rufsignaldetektor (RD) bzw. über einen selektiven Bandpaß (BP12, BP16) rt einem Gebührensignaldetektor GD zugeführt werden.

2. Schnittstelleneinrichtung nach Anspruch 1 mit einem Rufsignalgenerator,
bei dem das Ausgangssignal des Tiefpasses (TP) über einen Schwellwertschalter (US1) einem Flipflop (FF1) zugeführt wird, dessen Ausgang das Anliegen eines Rufsignals (RDS) anzeigt, und bei dem gleichzeitig mit dem Schwellwertschalterausgangssignal ein Zählertakt (CLK) für eine Zählschaltung (Z1) freigegeben wird, die nach Ausbleiben des zu erkennenden Signals nach einer vorgegebenen Zeit ein Zurücksetzen des Flipflops (FF1) veranlaßt.

3. Schnittstelleneinrichtung nach Anspruch 1, mit einem Gebührensignaldetektor, bei dem die Gebührenimpulse hinter dem Bandpass (BP12, BP16) einen Schwellwertschalter (US2, US3) durchlaufen an dessen Ausgang sie eine Impulsfolge erzeugen, deren Frequenz der des Gebührenimpulssignals entspricht,
bei dem mit der ersten Flanke der Impulsfolge ein Flipflop (FF2, FF3) gesetzt wird, dessen Ausgang das Anliegen eines Gebührenimpulses anzeigt, und gleichzeitig eine Zählschaltung (Z2) zurückgesetzt wird,
und bei dem nach Ausbleiben der Impulsfolge länger als eine vorgegebene Zeit die Zählschaltung nach erreichen des entsprechenden Zählwertes ein Zurücksetzen des Flipflops (FF2, FF3) veranlaßt.

4. Schnittstelleneinrichtung nach Anspruch 3, bei dem eine Umschaltemöglichkeit (GW) zwischen zwei Schwellwertschaltern (US2, US3) mit unterschiedlichen Schwellwerten besteht.

5. Schnittstelleneinrichtung nach Anspruch 3, bei dem entsprechend der Frequenz der Gebührenimpulse einer von zwei vorhandenen Bandpässen (BP12, BP16) wirksam geschaltet wird, wobei jedem Bandpaß ein eigenes Flipflop (FF2, FF3) und ein entsprechender Zählwert der Zählschaltung (Z2) zugeordnet ist.

## Claims

1. Interface device having amplifying and attenuating elements as well as different signalling detectors between a bidirectional transmission channel with analog signals and a signal processor-codec filter, having a four-wire input, for matching the line signalling to the interface messages of a digital communication system, characterized in that the amplifying and attenuating elements (VDT) for the voice are arranged in the four-wire circuit, in that the transmitter (Ü) of the connecting line is operated as an attenuating element in the lower frequency range, and the complex transmitting and terminating impedance (Z) is selected such that all the signalling voltages are transformed into a region which can be evaluated for a 10 V technology, the signalling voltages being tapped downstream of the complex impedance (Z), and the signalling voltages being fed, for the purpose of suppressing higher frequency interference signals, via a low-pass filter (TP) to a ringing signal detector (RD) or, via a selective bandpass filter (BP12, BP16), to a call charge signal detector (GD).

2. Interface device according to Claim 1, having a ringing signal generator, in which the output signal of the low-pass filter (TP) is fed via a trigger (US1) to a flipflop (FF1) whose output indicates the presence of a ringing signal (RDS), and in which there is enabled simultaneously with the trigger output signal a counter clock (CLK) for a counting circuit (Z1) which causes a resetting of the flipflop (FF1) after a prescribed time following the absence of the signal to be recognized.

3. Interface device according to Claim 1, having a call charge signal detector in which downstream of the bandpass filter (BP12, BP16) the call charge pulses traverse a trigger (US2, US3) at whose output they generate a pulse train whose frequency corresponds to that of the call charge pulse signal, in which the first edge of the pulse train sets a flipflop (FF2, FF3) whose output indicates the presence of a call charge pulse and, simultaneously, a counting circuit (Z2) is reset, and in which the absence of the pulse train for longer than a prescribed time causes the counting circuit to reset the flipflop (FF2, FF3) after reaching the corresponding count value.

4. Interface device according to Claim 3, in which a switchover possibility (GW) exists between two triggers (US2, US3) having different threshold values.

5. Interface device according to Claim 3, in which, in accordance with the frequency of the call charge pulses, one of two available bandpass filters (BP12, BP16) is activated, each bandpass filter being assigned a dedicated flipflop (FF2, FF3) and a corresponding count value of the counting circuit (22).

## Revendications

1. Dispositif d'interface comportant des éléments d'amplification et d'atténuation, ainsi que des détecteurs de signalisation différents entre un canal de transmission dirigé dans les deux sens, comportant des signaux analogiques et un filtre codec comportant une entrée à quatre fils et destiné à l'adaptation de la signalisation de ligne aux messages d'interface d'un système numérique de communication,
caractérisé en ce que
les éléments (VDT) d'amplification et d'atténuation de la parole sont disposés dans le circuit à quatre fils,
le transformateur (Ü) de la ligne de jonction fonctionne en tant qu'élément d'atténuation dans le domaine inférieur de fréquence et la résistance (Z) complexe d'émission ou de terminaison est choisie de telle sorte que toutes les tensions de signalisation soient transformées en un domaine pouvant être exploité dans une technologie 10 V,
les tensions de signalisation sont prélevées derrière la résistance (Z) complexe
et les tensions de signalisation sont envoyées, pour la suppression de signaux parasites de haute fréquence, par l'intermédiaire d'un passe-bas (TP) à un détecteur (RD) de signal d'appel ou par l'intermédiaire d'un passe-bande (BP12, BP16) sélectif à un détecteur GD de signal de taxation.

2. Dispositif d'interface suivant la revendication 1, comportant un générateur de signal d'appel, dans lequel le signal de sortie du passe-bas (TP) est envoyé par l'intermédiaire d'un interrupteur (US1) à seuil à une bascule bistable (FF1), dont la sortie indique l'application d'un signal (RDS) d'appel, et dans lequel une cadence (CLK) de comptage est fournie, en même temps que le signal de sortie de l'interrupteur à seuil, à un circuit (Z1) de comptage, qui provoque, après l'absence du signal à reconnaître et après un temps prescrit une remise à l'état initial de la bascule bistable (FF1).

3. Dispositif d'interface suivant la revendication 1, comportant un détecteur de signal de taxation, dans lequel les impulsions de taxation traversent derrière le passe-bande (BP12, BP16) un interrupteur (US2, US3) à seuil, à la sortie duquel elles produisent un train d'impulsions, dont la fréquence correspond à celle du signal d'impulsion de taxation,
dans lequel une bascule bistable (FF2, FF3) dont la sortie indique l'application d'une impulsion de taxation, est positionnée au premier flanc du train d'impulsions et un circuit (22) de comptage est remis à l'état initial en même temps
et dans lequel, lorsque le train d'impulsions a été absent pendant un temps plus long qu'un temps prescrit, le circuit de comptage provoque, après avoir atteint la valeur de comptage appropriée, une remise à l'état initial de la bascule bistable (FF2, FF3).

4. Dispositif d'interface suivant la revendication 3, dans lequel il existe une possibilité (GW) de commutation entre deux interrupteurs (US2, US3) à seuils différents.

5. Dispositif d'interface suivant la revendication 3, dans lequel un passe-bande parmi deux passes-bandes présents (BP12, BP16) est branché à l'état actif en fonction de la fréquence des impulsions de taxation, une bascule bistable propre (FF2, FF3) et une valeur de comptage appropriée du circuit (22) de comptage étant associées à chaque passe-bande.
